# FASCICULE DE BREVET EUROPEEN

(11) **EP 3 214 357 B1**
(45) Date de publication et mention de la délivrance du brevet: **15.08.2018**
(21) Numéro de dépôt: 17157574.9
(22) Date de dépôt: 23.02.2017
(51) Int. Cl.: F17C 13/04

(54) **ROBINET POUR FLUIDE SOUS PRESSION**
HAHN FÜR FLÜSSIGKEIT UNTER DRUCK
VALVE FOR PRESSURISED FLUID

(30) Priorité: 03.03.2016 FR 1651799
(43) Date de publication de la demande: 06.09.2017
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: FRENAL, Antoine, 95460 EZANVILLE (FR); ONDO, Olivier, 78710 ROSNY SUR SEINE (FR)
(74) Mandataire: De Cuenca, Emmanuel Jaime

(56) Documents cités:
- EP-A1- 2 835 573
- BE-A- 574 092
- FR-A1- 2 774 452
- FR-A1- 2 783 894
- GB-A- 2 514 360

## Description

L'invention concerne un robinet pour fluide sous pression.

L'invention concerne plus particulièrement un robinet pour fluide sous pression, avec ou sans détendeur de pression intégré, comprenant un corps abritant un circuit de fluide ayant une extrémité amont destinée à être mise en relation avec une réserve de fluide sous pression et une extrémité aval destinée à être mise en relation avec un appareil utilisateur, le circuit comprenant une vanne de contrôle du débit dans le circuit, la vanne étant commandée par un levier monté pivotant sur le corps du robinet entre une position de repos dans laquelle la vanne est maintenu dans un premier état correspondant à une première valeur de débit dans le circuit et une seconde position active dans laquelle le levier déplace la vanne dans un second état correspondant à une seconde valeur de débit dans le circuit.

Les documents BE574092A, GB2514360A, FR2828922A1 et FR2735209 décrivent des exemples de robinets comprenant une vanne d'isolation actionnée par un levier pivotant.

Lorsque ce type robinet est abrité dans un chapeau de protection ceci limite les risques d'actionnement accidentel ou intempestif du levier.

Cependant, lorsque le robinet est situé dans un chapeau moins abritant, ce risque de déplacement accidentel du levier est accru.

Ces robinets doivent également être perfectionnés et notamment en ce qui concerne la compacité et/ou leur ergonomie d'utilisation.

Un but de la présente invention est de pallier tout ou partie des inconvénients de l'art antérieur relevés ci-dessus.

A cette fin, le robinet selon l'invention, par ailleurs conforme à la définition générique qu'en donne le préambule ci-dessus, est essentiellement caractérisé en ce que la surface extérieure du robinet comprend une rainure et en ce que, dans sa première position, une première portion du levier est logée dans la rainure et ne fait pas saillie ou faiblement saillie par rapport à la surface extérieure du robinet tandis qu'une seconde portion du levier fait saille en dehors de la rainure.

Par ailleurs, des modes de réalisation de l'invention peuvent comporter l'une ou plusieurs des caractéristiques suivantes :
- l'un au moins parmi : la première ou la seconde portion du levier est rectiligne et/ou coudé et/ou courbe,
- en configuration d'utilisation, la surface extérieure du robinet comprend une surface supérieure et une surface latérale, la rainure étant formée au niveau de la surface latérale et/ou au niveau de la surface supérieure,
- la première portion du levier est coudée et est reçue dans la rainure qui s'étend sur la surface supérieure et sur la surface latérale du robinet,
- la rainure a des dimensions et une forme conjuguées des dimensions et forme de la portion du levier qu'elle accueille,
- les première et seconde portions du levier sont reliées avec un angle de façon à former un coude,
- le levier est articulé sur le robinet au niveau d'une première extrémité, ladite première extrémité étant située à l'extrémité opposée à la seconde portion du levier,
- l'enveloppe extérieure est montée mobile sur le corps du robinet,
- l'enveloppe extérieure est montée mobile en translation sur le corps du robinet entre un première et une seconde position, lors de son déplacement entre les première et seconde positions, la rainure coulissant par rapport au levier, lorsque le levier est dans sa première position, le levier restant au moins en partie logé dans la rainure lors du déplacement de l'enveloppe,
- l'enveloppe extérieure mobile comprend un manchon tubulaire,
- le robinet comprend une extrémité de montage comprenant des organes mobiles d'accrochage destinés à coopérer avec des organes d'accrochage complémentaires pour former un système de connexion rapide du robinet sur une source de gaz ou un circuit et en ce que l'enveloppe extérieure mobile est un organe de verrouillage et/ou de déverrouillage des organes mobiles d'accrochage,
- les organes mobiles d'accrochage comprennent des billes ou griffes et en ce que dans sa première position l'enveloppe extérieure ne bloque pas le déplacement des organes mobiles d'accrochage et, dans sa seconde position, l'enveloppe extérieure bloque le déplacement des organes mobiles.

L'invention concerne également un réservoir ou un ensemble de réservoirs de fluides sous pression comprenant un tel robinet.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
- la figure 1 représente une vue en perspective, schématique et partielle, illustrant un exemple de robinet selon l'invention,
- la figure 2 représente une vue en coupe, schématique et partielle, illustrant le robinet de la figure 1 selon deux configurations distinctes (positions distinctes de son levier),
- la figure 3 représente une vue de côté, schématique et partielle, illustrant un autre exemple de réalisation d'un robinet selon l'invention,
- la figure 4 représente une vue de côté, schématique et partielle, illustrant un autre exemple de réalisation d'un robinet selon l'invention dans une première configuration,
- la figure 5 représente le robinet de la figure 4 dans une vue similaire et selon une seconde configuration,
- la figure 6 représente une vue en perspective, schématique et partielle, illustrant un détail de la structure d'un exemple de robinet selon l'invention.

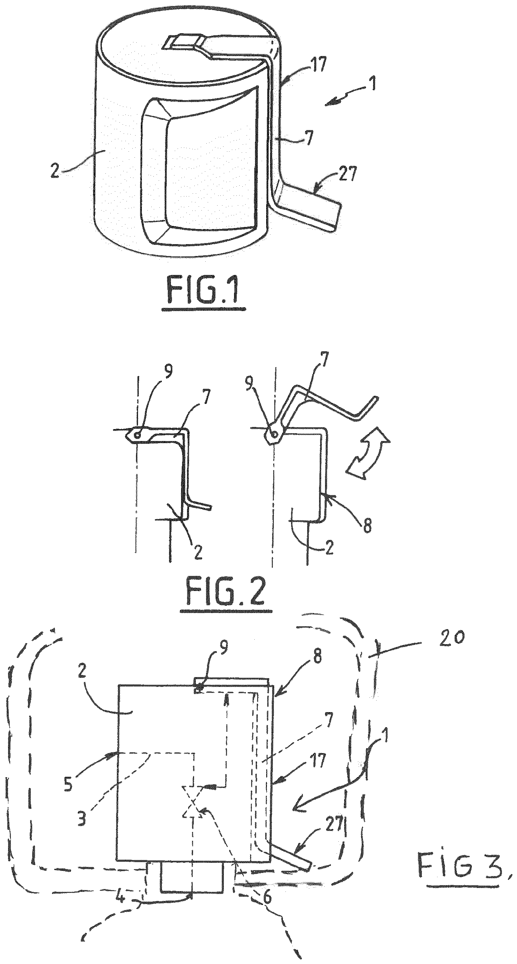

Le robinet 1 représenté aux figures 1 à 3 comprend un corps 2 abritant classiquement un circuit 3 de fluide ayant une extrémité 4 amont destinée à être mise en relation avec une réserve de fluide sous pression (une bouteille ou un ensemble de bouteilles par exemple) et une extrémité 5 aval destinée à être mise en relation avec un appareil utilisateur du gaz fourni par la réserve de fluide sous pression.

Le circuit 3 comprend classiquement une vanne 6 de contrôle du débit dans le circuit 3. Cette vanne 6 peut être un clapet d'isolation pour l'ouverture ou la fermeture du circuit 3 et/ou un clapet permettant de régler un débit ou une pression ou tout autre type de clapet approprié.

La vanne 6 est commandée par un levier 7 monté pivotant sur le corps 2 du robinet 1 (au niveau par exemple d'au moins une articulation 9). Par exemple, le levier 7 est articulé au niveau d'une de ses extrémités, par exemple sur la partie supérieure du corps 2 du robinet 1.

Le levier 7 est mobile entre une position de repos (partie gauche de la figure 1) dans laquelle la vanne 6 est maintenu dans un premier état correspondant à une première valeur de débit dans le circuit 3 (par exemple un débit nul) et une seconde position active (partie droite de la figure 2) dans laquelle le levier 7 déplace la vanne 6 dans un second état correspondant à une seconde valeur de débit dans le circuit 3 (par exemple circuit complètement ouvert pour un débit maximal).

L'organe 6 de contrôle de débit dans le circuit 3 représenté aux figures comprend une vanne 6 mais tout autre organe 6 de contrôle de débit pourrait être envisagé.

Par exemple, en variante ou en combinaison, le robinet 2 pourrait comprendre une pièce mobile telle qu'un pousse-clapet dont le mouvement est commandé par le levier 7. Ce pousse- clapet, par exemple mobile en translation, peut être prévu par exemple pour actionner (ouvrir notamment) un système de clapet(s) situé sur un autre robinet ou une bouteille sur lequel le robinet vient se raccorder pour prélever ou transférer du fluide sous pression.

Selon une particularité avantageuse, la surface extérieure du robinet 1 comprend une rainure 8 et, dans sa première position, une première portion 17 du levier 7 est logée dans la rainure 8 et ne fait pas saillie ou faiblement saillie par rapport à la surface extérieure du robinet 1. Une seconde portion 27 du levier 7 (de préférence l'extrémité terminale de préhension) fait saille en dehors de la rainure 7.

Lorsque le levier 7 quitte sa première position (notamment dans sa seconde position), la première portion 17 sort de la rainure et fait saillie par rapport à la surface extérieure du corps du robinet. De préférence la seconde portion 27 du levier fait également saillie (cf la figure 2).

La première portion 17 du levier 7 ne fait pas saillie ou faiblement saillie par rapport à la surface extérieure du robinet 1 signifie par exemple que cette portion 17 du levier est intégrée au volume du robinet. C'est-à-dire que cette portion 17 du levier 7 n'est pas ou peu visible lorsque le robinet 1 est vu de côté et cette portion 17 n'est pas accessible manuellement (ou difficilement). C'est-à-dire que cette portion du levier affleure ou est en retrait ou faiblement en saillie par rapport à la surface extérieure du robinet. Par exemple, la seconde portion 17 fait saillie hors de la rainure 8 sur une distance inférieure à la moitié de son épaisseur.

Dans sa première position le levier 7 est par exemple en appui ou butée contre le fond de la rainure 8.

Comme illustré, la première 17 et la seconde portion 27 du levier 7 peuvent être rectilignes. Bien entendu, ces portions 17, 27 du robinet pourraient être coudées et/ou courbes.

En configuration d'utilisation, la surface extérieure du robinet 1 comprend par exemple une surface supérieure sensiblement horizontale et une surface latérale sensiblement verticale. Dans l'exemple non limitatif illustré aux figures, la rainure 8 peut être formée au niveau de la surface latérale et au niveau de la surface supérieure. C'est-à-dire que la première portion 17 du levier 7 est coudée et est reçue dans la rainure 8 qui s'étend sur la surface supérieure et sur la surface latérale du robinet 1.

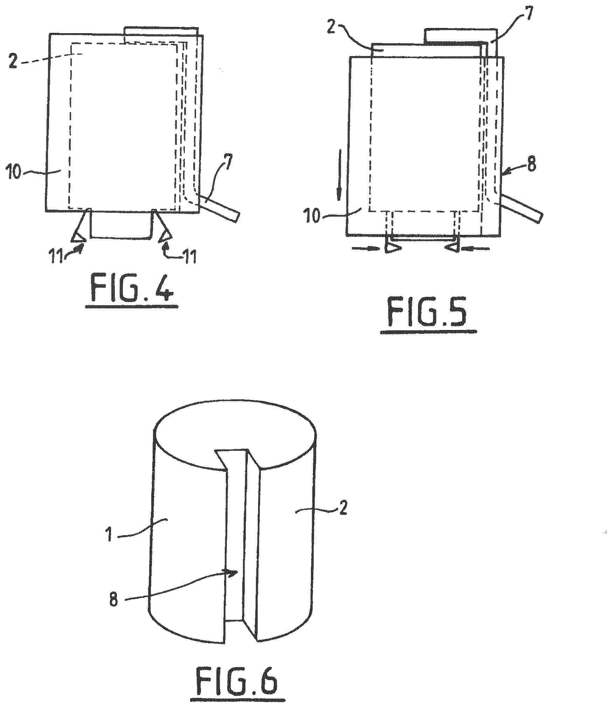

De préférence, la rainure 8 a des dimensions et une forme conjuguées des dimensions et forme de la portion 17 du levier 7 qu'elle accueille. C'est-à-dire que le levier 7 s'ajuste dans sa rainure 8 (cf. également figure 6).

De plus, les première 17 et seconde 27 portions du levier 7 peuvent être reliées avec un angle de façon à former un coude de sorte que l'extrémité terminale du levier 7 fait saillie en dehors de la rainure 8 vers l'extérieur pour faciliter et localiser la zone de préhension du levier. Cette zone accessible est localisée et limitée et diminue ainsi les risques que le levier puisse être accroché accidentellement et déplacé dans sa seconde position.

Dans l'exemple de réalisation des figures 4 et 5 le robinet comporte une enveloppe 10 extérieure fixée sur la surface extérieure du corps 2 du robinet 1 et la rainure 8 est formée au moins en partie dans cette enveloppe 10. Cette enveloppe 10 peut être une coque ayant une fonction de protection et/ou une fonction esthétique et/ou une autre fonctionnalité.

En particulier, et comme illustré aux figures 4 et 5, l'enveloppe 10 extérieure peut être montée mobile sur le corps 2 du robinet 1.

Par exemple, l'enveloppe 10 extérieure est montée mobile en translation et/ou en rotation (et/ou autre le cas échéant) sur le corps 2 du robinet 1. Dans l'exemple des figures l'enveloppe 10 est mobile entre un première et une seconde position (cf. figures 4 et 5). Par exemple ce mouvement est une translation parallèle à l'axe vertical du robinet 1 (direction haut/bas). Lors de son déplacement entre les première et seconde positions, la rainure 8 peut ainsi coulisser le long/autour du levier 7. De préférence, lorsque le levier 7 est dans sa première position, le levier 7 reste au moins en partie logé dans la rainure 8 lors du déplacement de l'enveloppe 10.

L'enveloppe 10 extérieure mobile déplaçable manuellement peut comprendre ou être constitué d'un manchon tubulaire.

Dans un mode de réalisation possible illustré aux figures 4 et 5, le robinet comprend une extrémité de montage munie d'organes 11 mobiles d'accrochage destinés à coopérer avec des organes d'accrochage complémentaires pour former un système de connexion rapide du robinet 1 sur une source de gaz (ou sur un circuit).

Les organes 11 mobiles d'accrochage comprennent par exemple un système à bille(s) et/ou ou griffes et/ou pions.

L'enveloppe 10 extérieure mobile peut être un organe de verrouillage et/ou de déverrouillage des organes 11 mobiles d'accrochage actionnable manuellement ou automatiquement.

C'est-à-dire que, selon sa position, l'enveloppe 10 verrouille ou non le raccordement du robinet 1 sur un accessoire (autre robinet solidaire d'une bouteille de gaz par exemple).

Par exemple, dans sa première position (position haute par exemple, cf. figure 4) l'enveloppe 10 extérieure ne bloque pas le déplacement des organes 11 mobiles d'accrochage et, dans sa seconde position (position basse cf. figure 5), l'enveloppe 10 extérieure bloque (verrouille) le déplacement des organes 11 mobiles.

L'enveloppe 10 extérieure permet ainsi d'intégrer plusieurs fonctions et participe à la compacité et à l'ergonomie du robinet 1.

## Revendications

1. Robinet pour fluide sous pression, avec ou sans détendeur de pression intégré, comprenant un corps (2) abritant un circuit (3) de fluide ayant une extrémité (4) amont destinée à être mise en relation avec une réserve de fluide sous pression et une extrémité (5) aval destinée à être mise en relation avec un appareil utilisateur, le circuit (3) comprenant une vanne (6) de contrôle du débit dans le circuit (3), la vanne (6) étant commandée par un levier (7) monté pivotant sur le corps (2) du robinet (1) entre une position de repos dans laquelle la vanne (6) est maintenu dans un premier état correspondant à une première valeur de débit dans le circuit (3) et une seconde position active dans laquelle le levier (7) déplace la vanne (6) dans un second état correspondant à une seconde valeur de débit dans le circuit (3), **caractérisé en ce que** la surface extérieure du robinet (1) comprend une rainure (8) et **en ce que**, dans sa première position, une première portion (17) du levier (7) est logée dans la rainure (8) et ne fait pas saillie ou faiblement saillie par rapport à la surface extérieure du robinet (1) tandis qu'une seconde portion (27) du levier (7) fait saille en dehors de la rainure (7) et **en ce que** lorsque le levier (7) quitte sa première position, la première portion sort de la rainure (8) et fait saillie par rapport à la surface extérieure du corps du robinet.

2. Robinet selon la revendication 1, **caractérisé en ce que** l'un au moins parmi : la première (17) ou la seconde portion (27) du levier (7) est rectiligne et/ou coudé et/ou courbe.

3. Robinet selon la revendication 1 ou 2, **caractérisé en ce que**, en configuration d'utilisation, la surface extérieure du robinet (1) comprend une surface supérieure et une surface latérale et **en ce que** la rainure (8) est formée au niveau de la surface latérale et/ou au niveau de la surface supérieure.

4. Robinet selon la revendication 3, **caractérisé en ce que** la première portion (17) du levier (7) est coudée et est reçue dans la rainure (8) qui s'étend sur la surface supérieure et sur la surface latérale du robinet.

5. Robinet selon l'une quelconque des revendications 1 à 4, **caractérisé en ce que** la rainure (8) a des dimensions et une forme conjuguées des dimensions et forme de la portion (17) du levier (7) qu'elle accueille.

6. Robinet selon l'une quelconque des revendications 1 à 5, **caractérisé en ce que** les première (17) et seconde (27) portions du levier (7) sont reliées avec un angle de façon à former un coude.

7. Robinet selon l'une quelconque des revendications 1 à 6, **caractérisé en ce que** le levier (7) est articulé (9) sur le robinet (1) au niveau d'une première extrémité, ladite première extrémité étant située à l'extrémité opposée à la seconde portion (27) du levier (7).

8. Robinet selon l'une quelconque des revendications 1 à 6, **caractérisé en ce qu'**il comporte une enveloppe (10) extérieure rapportée sur la surface extérieure du corps (2) du robinet (1) et **en ce que** la rainure (8) est formée au moins en partie dans ladite enveloppe (10).

9. Robinet selon la revendication 8, **caractérisé en ce que** l'enveloppe (10) extérieure est montée mobile sur le corps (2) du robinet (1).

10. Robinet selon la revendication 8 ou 9, **caractérisé en ce que** l'enveloppe (10) extérieure est montée mobile en translation sur le corps (2) du robinet (1) entre un première et une seconde position et **en ce que**, lors de son déplacement entre les première et seconde positions, la rainure (8) coulisse par rapport au levier (7), et **en ce que**, lorsque le levier (7) est dans sa première position, le levier (7) reste au moins en partie logé dans la rainure (8) lors du déplacement de l'enveloppe (10).

11. Robinet selon l'une quelconque des revendications 8 à 10, **caractérisé en ce que** l'enveloppe (10) extérieure mobile comprend un manchon tubulaire.

12. Robinet selon l'une quelconque des revendications 8 à 11, **caractérisé en ce qu'**il comprend une extrémité de montage comprenant des organes (11) mobiles d'accrochage destinés à coopérer avec des organes d'accrochage complémentaires pour former un système de connexion rapide du robinet (1) sur une source de gaz ou un circuit et **en ce que** l'enveloppe (10) extérieure mobile est un organe de verrouillage et/ou de déverrouillage des organes (11) mobiles d'accrochage.

13. Robinet selon la revendication 12, **caractérisé en ce que** les organes (11) mobiles d'accrochage comprennent des billes ou griffes et **en ce que** dans sa première position l'enveloppe (10) extérieure ne bloque pas le déplacement des organes (11) mobiles d'accrochage et, dans sa seconde position, l'enveloppe (10) extérieure bloque le déplacement des organes (11) mobiles.

14. Bouteille de fluide sous pression comprenant un robinet de fluide sous pression conforme à l'une quelconque des revendications 1 à 13, dans lequel la bouteille comporte un chapeau (20) de protection monté sur la bouteille et formant une protection autour du robinet.

15. Ensemble de réservoir de fluide sous pression comprenant un robinet selon l'une quelconque des revendications 1 à 13.

## Patentansprüche

1. Hahn für druckbeaufschlagtes Fluid, mit oder ohne integrierten Druckminderer, einen Körper (2) umfassend, der einen Fluidkreislauf (3) beinhaltet, der ein vorgelagertes Ende (4), das dazu dient, mit einer Reserve druckbeaufschlagten Fluids verbunden zu werden und ein nachgelagertes Ende (5) aufweist, das dazu dient, mit einem Benutzergerät verbunden zu werden, wobei der Kreislauf (3) ein Ventil (6) zur Steuerung der Durchflussmenge im Kreislauf (3) enthält, wobei das Ventil (6) von einem Hebel (7) gesteuert wird, der schwenkend am Körper (2) des Hahns (1) befestigt ist, zwischen einer Ruhestellung, in der das Ventil (6) in einem ersten Zustand gehalten wird, der einem ersten Durchflusswert im Kreislauf (3) entspricht und einer zweiten aktiven Stellung, in der der Hebel (7) das Ventil (6) in einen zweiten Zustand bewegt, der einem zweiten Durchflusswert im Kreislauf (3) entspricht, **dadurch gekennzeichnet, dass** die Außenoberfläche des Hahns (1) eine Rille (8) umfasst und dass, in seiner ersten Stellung ein erster Abschnitt (17) des Hebels (7) sich in der Rille (8) befindet und nicht oder nur leicht gegenüber der Außenoberfläche des Hahns (1) vorsteht, während ein zweiter Abschnitt (27) des Hebels (7) aus der Rille (7) hervorsteht und dadurch, dass wenn der Hebel (7) seine erste Stellung verlässt, der erste Abschnitt sich aus der Rille (8) bewegt und gegenüber der Außenoberfläche des Körpers des Hahns hervorsteht.

2. Hahn nach Anspruch 1, **dadurch gekennzeichnet, dass** mindestens eines aus: erstem (17) oder zweitem Abschnitt (27) des Hebels (7) geradlinig und/oder rechtwinklig und/oder gekrümmt ist.

3. Hahn nach Anspruch 1 oder 2, **dadurch gekennzeichnet, dass** die Außenoberfläche des Hahns (1) in der Benutzungskonfiguration eine obere Oberfläche und eine seitliche Oberfläche umfasst und dass die Rille (8) an der seitlichen Oberfläche und/oder an der oberen Oberfläche geformt ist.

4. Hahn nach Anspruch 3, **dadurch gekennzeichnet, dass** der erste Abschnitt (17) des Hebels (7) rechtwinklig ist und in der Rille (8) aufgenommen wird, die sich über die obere Oberfläche und die seitliche Oberfläche des Hahns erstreckt.

5. Hahn nach einem der Ansprüche 1 bis 4, **dadurch gekennzeichnet, dass** die Rille (8) Abmessungen und eine Form hat, die mit den Abmessungen und der Form des Abschnitts (17) des Hebels (7) zusammenwirken, den sie aufnimmt.

6. Hahn nach einem der Ansprüche 1 bis 5, **dadurch gekennzeichnet, dass** der erste (17) und zweite (27) Abschnitt des Hebels (7) so mit einem Winkel verbunden sind, dass dies einen Bogen formt.

7. Hahn nach einem der Ansprüche 1 bis 6, **dadurch gekennzeichnet, dass** der Hebel (7) an einem ersten Ende gelenkig (9) an dem Hahn (1) angebracht ist, wobei das erste Ende sich an Ende gegenüber des zweiten Abschnitts (27) des Hebels (7) befindet.

8. Hahn nach einem der Ansprüche 1 bis 6, **dadurch gekennzeichnet, dass** er eine äußere Hülle (10) umfasst, die auf der Außenoberfläche des Körpers (2) des Hahns (1) angebracht ist und dadurch, dass die Rille (8), mindestens teilweise, in dieser Hülle (10) geformt ist.

9. Hahn nach Anspruch 8, **dadurch gekennzeichnet, dass** die äußere Hülle (10) mobil auf dem Körper (2) des Hahns (1) angebracht ist.

10. Hahn nach Anspruch 8 oder 9, **dadurch gekennzeichnet, dass** die äußere Hülle (10) mobil verschiebbar auf dem Körper (2) des Hahns (1) zwischen einer ersten und einer zweiten Position angebracht ist, und dadurch, dass die Rille (8), bei ihrer Bewegung zwischen der ersten und der zweiten Position bezüglich des Hebels (7) gleitet, und dadurch, dass, wenn der Hebel (7) sich in seiner ersten Position befindet, der Hebel (7) bei der Bewegung der Hülle (10) mindestens teilweise in der Rille (8) bleibt.

11. Hahn nach einem der Ansprüche 8 bis 10, **dadurch gekennzeichnet, dass** die mobile äußere Hülle (10) eine Rohrmuffe umfasst.

12. Hahn nach einem der Ansprüche 8 bis 11, **dadurch gekennzeichnet, dass** er ein Montageende umfasst, welches mobile Anhängelemente (11) umfasst, die zur Zusammenarbeit mit den ergänzenden Anhängelementen bestimmt sind, um ein Schnellverbindungssystem des Hahns (1) auf einer Gasquelle oder einem Kreislauf zu bilden, und dadurch, dass die mobile äußere Hülle (10) ein Ver- und/oder Entriegelungselement der mobilen Anhängelemente (11) ist.

13. Hahn nach Anspruch 12, **dadurch gekennzeichnet, dass** die mobilen Anhängelemente (11) Kugeln oder Klauen beinhalten, und dadurch, dass die äußere Hülle (10) in ihrer ersten Stellung nicht die Bewegung der mobilen Anhängelemente (11) blockiert und dass die äußere Hülle (10) in ihrer zweiten Stellung die Bewegung der mobilen Anhängelemente (11) blockiert.

14. Druckbeaufschlagte Fluidflasche, die einen druckbeaufschlagten Fluidhahn nach einem der Ansprüche 1 bis 13 umfasst, wobei die Flasche eine Schutzabdeckung (20) enthält, die auf die Flasche montiert ist und einen Schutz um den Hahn bildet.

15. Behältereinheit für druckbeaufschlagtes Fluid mit einem Hahn nach einem der Ansprüche 1 bis 13.

## Claims

1. Tap for fluid under pressure, with or without integrated pressure reducer, comprising a body (2) housing a circuit (3) for fluid having an upstream extremity (4) destined to be connected with a reserve of fluid under pressure and a downstream extremity (5) destined to be connected to a user apparatus, the circuit (3) comprises a flow rate control valve (6) in the circuit (3), the valve (6) being commanded by a mounted lever (7) pivoting on the body (2) of the tap (1) between a rest position in which the valve (6) is maintained in a first state corresponding to an initial flow rate value in the circuit (3) and a second active position in which the lever (7) displaces the valve (6) in a second state corresponding to a second flow rate value in the circuit (3), **characterised in that** the exterior surface of the tap (1) comprises a groove (8) and **in that**, in its first position, a first portion (17) of the lever (7) is housed in the groove (8) and does not protrude or only slightly compared to the exterior surface of the tap (1), whereas a second portion (27) of the lever (7) protrudes outside of the groove (7) when the lever (7) leaves its first position, the first portion leaves the groove (8) and protrudes compared to the exterior surface of the body of the tap.

2. Tap, according to claim 1, **characterised in that** at least one amongst: the first (17) or the second portion (27) of the lever (7) is straight and/or bent and/or curved.

3. Tap according to claim 1 or 2, **characterised in that**, when configured for use, the exterior surface of the tap (1) comprises an upper surface and a lateral surface and that the groove (8) is formed on a level with the lateral surface and/or on a level with the upper surface.

4. Tap according to claim 3, **characterised in that** the first portion (17) of the lever (7) is bent and is received into the groove (8) which extends onto the upper surface and the lateral surface of the tap.

5. Tap according to one of the claims 1 to 4, **characterised in that** the groove (8) has dimensions and form conjugated from the dimensions and form of the portion (17) of the lever (7) that it accepts.

6. Tap according to one of the claims 1 to 5, **characterised in that** the first (17) and second (27) portions of the lever (7) are connected with an angle in such a way as to form an elbow.

7. Tap according to one of the claims 1 to 6, **characterised in that** the lever (7) is articulated (9) on the tap (1) at the level of the first extremity, the said extremity being situated at the extremity opposite the second portion (27) of the lever (7).

8. Tap according to one of the claims 1 to 6, **characterised in that** it comprises an exterior envelope (10) offset on the exterior surface of the body (2) of the tap (1) and **in that** the groove (8) is formed at least in part in this said envelope (10).

9. Tap according to claim 8, **characterised in that** the exterior envelope (10) is mounted so as to be movable on the body (2) of the tap (1).

10. Tap according to claim 8 or 9, **characterised in that** the exterior envelope (10) is mounted so as to be movable in translation on the body (2) of the tap (1) between a first and a second position and **in that**, during its movement between the first and second positions, the groove (8) slides in relation to the lever (7), and **in that**, when the lever (7) is in its first position, the lever (7) remains partially lodged in the groove (8) when the envelope (10) moves.

11. Tap according to one of the claims 8 to 10, **characterised in that** the exterior moveable envelope (10) comprises a tubular sleeve.

12. Tap according to one of the claims 8 to 11, **characterised in that** it comprises a mounting extremity comprising mobile fastening organs (11), destined to co-operate with the complementary fastening organs to form a rapid system of connection for the tap (1) to a gas supply or to a circuit and **in that** this moveable exterior envelope (10) is an organ for locking and/or unlocking the mobile fastening organs (11).

13. Tap according to claim 12, **characterised in that** the mobile fastening organs (11) comprise balls or pegs and **in that** in its first position, the exterior envelope (10) does not block the movement of the mobile fastening organs (11) and, in its second position, the exterior envelope (10) blocks the movement of the mobile organs.

14. Bottle of fluid under pressure comprising a tap for fluid under pressure conform to one of the claims 1 to 13 in which the bottle has a protective cover (20) mounted on the bottle and forming a protection around the tap.

15. Fluid under pressure reservoir assembly comprising a tap according to one of the claims 1 to 13.
